(19) Europäisches Patentamt
European Patent Office
Office européen des brevets

(11) EP 1 818 443 A1

(12) **EUROPEAN PATENT APPLICATION**
published in accordance with Art. 158(3) EPC

(43) Date of publication:
**15.08.2007 Bulletin 2007/33**

(21) Application number: **05806284.5**

(22) Date of filing: **10.11.2005**

(51) Int Cl.:
***D06M 15/693*** *(2006.01)*

(86) International application number:
**PCT/JP2005/020638**

(87) International publication number:
**WO 2006/051873 (18.05.2006 Gazette 2006/20)**

(84) Designated Contracting States:
**DE FR GB IT**

(30) Priority: **11.11.2004 JP 2004327333**
**17.01.2005 JP 2005008612**

(71) Applicant: **Nippon Sheet Glass Co., Ltd.**
**Minato-ku, Tokyo 108-6321 (JP)**

(72) Inventors:
- **IMANISHI, Hideki,**
**Nippon Sheet Glass Company Ltd.**
**Tokyo 108-6321 (JP)**
- **KAJIHARA, Keisuke,**
**Nippon Sheet Glass Company Ltd.**
**Tokyo 108-6321 (JP)**
- **AKIYAMA, Mitsuharu**
**Nippon Sheet Glass Company Ltd.**
**Tokyo 108-6321 (JP)**

(74) Representative: **Hubert, Philippe et al**
**Cabinet Beau de Loménie**
**158, rue de l'Université**
**75340 Paris Cédex 07 (FR)**

(54) **RUBBER-REINFORCING CORD, METHOD FOR MANUFACTURING SAME, AND RUBBER ARTICLE USING SAME**

(57) A reinforcing cord 10 for rubber reinforcement of the present invention includes a reinforcing fiber 11. A coating film 12 is formed on a surface of the reinforcing fiber 11. The coating film 12 includes, as its main components, a rubber having acrylonitrile as one of its raw materials and a compound containing an oxazoline group. A method of manufacturing a reinforcing cord for rubber reinforcement of the present invention includes (i) applying an aqueous mixture including, as its main components, a rubber latex having acrylonitrile as one of its raw materials and a compound containing an oxazoline group onto a reinforcing fiber, and (ii) drying the applied aqueous mixture to form a coating film on the surface of the reinforcing fiber.

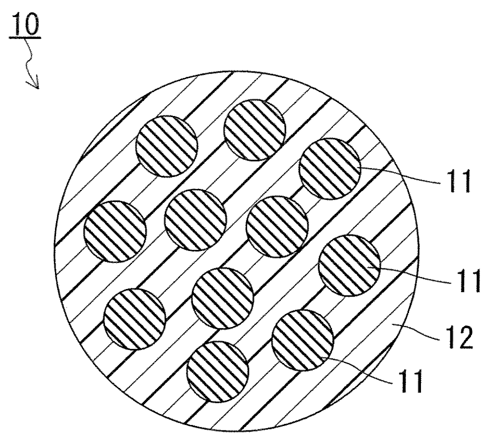


Fig.1

EP 1 818 443 A1

## Description

### Technical Field

The present invention relates to a reinforcing cord for rubber reinforcement and to a method of manufacturing the same. The present invention also relates to a rubber product having the reinforcing cord for rubber reinforcement buried therein.

### Background Art

In order to improve the strength and durability of rubber products, such as rubber belts and tires, it has been widely practiced to bury glass fibers, synthetic fibers and the like in a matrix rubber as reinforcing fibers. The reinforcing fibers themselves, however, do not generally fit in rubber very well and have poor adhesion to rubber. Accordingly, when the reinforcing fibers are buried in rubber without being subjected to surface processing, problems were prone to arise such as the reinforcing fibers and the rubber not adhering to each other or they easily separated while in use since the adhesion to each other is not firm.

In order to improve the adhesion of the reinforcing fibers to a matrix rubber and to prevent the reinforcing fibers from deteriorating, a method of forming coating films on the reinforcing fibers has been used. For example, JP63(1988)-270877A describes that a coating film is formed by applying a mixed aqueous adhesive of a resorcinol-formalin condensate and a hydrogenated nitrile rubber latex to a glass fiber as a reinforcing fiber and then drying and curing it. JP63 (1988)-270877A also describes that such glass fiber cords improve adhesion to a matrix rubber containing a hydrogenated nitrile rubber as its main component.

With respect to a coating film for reinforcing fibers, it is necessary to change/adjust components and the like according to the type and the characteristics of matrix rubber. This is because the best combination for enhancing the adhesion of the matrix rubber to the coating film depends on the type of matrix rubber. Therefore, even if the glass fiber cords described in JP63(1988)-270877A are useful in the matrix rubber containing a hydrogenated nitrile rubber as its main component, they do not always exhibit high adhesion to other types of matrix rubbers.

A rubber composition that contains, as its main components, a hydrogenated nitrile rubber (hereinafter also referred to as "H-NBR") and a hydrogenated nitrile rubber including zinc dimethacrylate dispersed therein (hereinafter also referred to as "H-NBR/ZDMA") has been known. Since rubber products using the matrix rubber containing H-NBR and H-NBR/ZDMA as its main components are extremely excellent in heat resistance, they are suitable for uses, such as toothed belts of vehicle engines.

As a reinforcing cord for rubber reinforcement that exhibits high adhesion to the matrix rubber mentioned above, a reinforcing cord for rubber reinforcement including a first coating layer containing a resorcinol-formalin condensate and a rubber latex for its reinforcing fibers and a second coating layer containing, as its main components, a rubber compound, a cross-linking agent and a maleimide cross-linking auxiliary over the first layer is described in JP11(1999)-241275A.

JP5(1993)-339552A (JP3379069B) discloses "a method of adhering a fiber material to a rubber". In the method, an adhesive composition for fibers made by dissolving water-soluble polymer containing a 2-oxazoline group in an aqueous medium is attached to the fiber material, and then the fiber material is adhered to a rubber composition. JP5 (1993)-339552A further describes "to add a rubber latex to the adhesive composition".

JP2004-183121A discloses "a reinforcing cord for rubber reinforcement provided with a coating film formed by applying an aqueous adhesive contains a rubber latex and a vulcanizing auxiliary as its main components on a reinforcing fiber and then drying and curing it".

Today, more durability is required, particularly for toothed belts in use for automobiles, and the reinforcing cord for rubber reinforcement according to JP11(1999)-241275A above has required further improvements from the perspective of durability. In addition, this reinforcing cord for rubber reinforcement was subject to complicated manufacturing steps due to the necessity to form both the first and the second coating layers.

The reinforcing cord for rubber reinforcement disclosed in JP2004-183121A above also has required further improvements in its durability.

Various matrix rubbers have been developed in recent years, and a matrix rubber containing an ethylene-propylene rubber as its main component is often employed as a matrix rubber that is more inexpensive than a matrix rubber contains a hydrogenated nitrile rubber as its main component and that does not contain halogen. Accordingly, a reinforcing cord for rubber reinforcement that can be used without choosing the type of matrix is demanded.

### Disclosure of Invention

The present invention was made with attention being given to the problems as described above. One of the

objects of the present invention is to provide a reinforcing cord for rubber reinforcement exhibiting high adhesion to a matrix rubber, and another object is to provide a method of manufacturing the same.

As a result of studies to achieve the objects described above, the present inventors found that a reinforcing cord for rubber reinforcement exhibiting high adhesion to a matrix rubber was acquired, even when it has a single layer coating film, by applying an aqueous mixture (an aqueous adhesive) including a compound containing an oxazoline group onto a reinforcing fiber for rubber reinforcement to form a coating film. The present invention was achieved based on this new knowledge.

The reinforcing cord for rubber reinforcement of the present invention is a reinforcing cord for rubber reinforcement that includes a reinforcing fiber. A coating film is formed on a surface of the reinforcing fiber. The coating film includes a rubber having acrylonitrile as one of its raw materials and a compound containing an oxazoline group.

The rubber product of the present invention is a rubber product in which the reinforcing cord for rubber reinforcement according to the present invention is buried in a matrix rubber.

The method of the present invention for manufacturing a reinforcing cord for rubber reinforcement includes (i) applying an aqueous mixture including, as its main components, a rubber latex having acrylonitrile as one of its raw materials and a compound containing an oxazoline group onto a reinforcing fiber, and (ii) drying the applied aqueous mixture to form a coating film on a surface of the reinforcing fiber.

The reinforcing cord for rubber reinforcement of the present invention can dramatically improve the adhesion to a matrix rubber by a coating film formed on the surface of the cord. Thus, a rubber product having this reinforcing cord for rubber reinforcement buried therein is excellent in durability, such as bending fatigue resistance, water resistance, oil resistance and heat resistance. The rubber product according to the present invention is so excellent in durability that it is suitable for uses such as toothed belts.

In addition, the present invention enables the coating film of the reinforcing fiber to be configured in a single layer, which makes it possible to facilitate manufacturing a reinforcing cord for rubber reinforcement resulting in reducing manufacturing costs.

<u>Brief Description of Drawings</u>

FIG. 1 is a cross-sectional view that schematically shows an example of the reinforcing cord for rubber reinforcement of the present invention.

FIG. 2 is a cross-sectional view that schematically shows the flat belt fabricated in Example.

FIG. 3 is a schematic view showing an apparatus for bending test employed in Example.

## BEST MODE FOR CARRYING OUT THE INVENTION

Hereinafter, embodiments of the present invention are described.

[Reinforcing Code for Rubber Reinforcement]

A reinforcing cord for rubber reinforcement of the present invention includes a reinforcing fiber. A coating film is formed on a surface of the reinforcing fiber. The coating film includes, as its main components, a rubber having acrylonitrile as one of its raw materials (hereinafter also referred to as "Rubber (A)") and a compound containing an oxazoline group (hereinafter also referred to as "Oxazoline Compound (B)"). The Rubber (A) and the Oxazoline Compound (B) account for 50 weight% or more of the coating film in total.

The Oxazoline Compound (B) may be insoluble in water. Here, "a compound insoluble in water" means a compound capable of forming aqueous dispersions.

The oxazoline group of the Oxazoline Compound (B) may be a 2-oxazoline group.

The Rubber (A) may include at least one rubber selected from a group consisting of a hydrogenated nitrile rubber and a nitrile rubber.

In the reinforcing cord for rubber reinforcement of the present invention, the coating film may include a resin. In this case, the resin may be at least one selected from the group consisting of polyurethane resin, epoxy resin, acrylic resin, phenol resin, melamine resin and low molecular weight polyolefin resin.

In the reinforcing cord for rubber reinforcement of the present invention, the coating film may include at least one selected from the group consisting of a condensate of resorcinol and formaldehyde, carbon black, a peroxide and isocyanate. Such a peroxide may be, for example, cumene hydroperoxide. Such isocyanate may be an organic compound having an isocyanic group, for example, dinitrosobenzene.

In the reinforcing cord for rubber reinforcement of the present invention, the coating film may include at least

one selected from the group consisting of vinylpyridine rubber, vinylpyridine-styrene-butadiene terpolymer rubber, butadiene rubber, butadiene-styrene copolymer rubber, dicarboxylated butadiene-styrene copolymer rubber, ethylene-propylene rubber, styrene terpolymer rubber, chlorosulfonated polyethylene rubber, fluorinated rubber and acrylic rubber.

[Rubber Product]

A rubber product of the present invention is a rubber product in which the reinforcing cord for rubber reinforcement according to the present invention is buried in a matrix rubber.
The matrix rubber may include a hydrogenated nitrile rubber as its main component (content: 50 weight% or more). In this case, the hydrogenated nitrile rubber may include zinc dimethacrylate dispersed therein. The matrix rubber may include an ethylene-propylene rubber as its main component (content: 50 weight% or more).
The rubber product of the present invention may be a toothed belt.

[Method of Manufacturing a Reinforcing Cord for Rubber Reinforcement]

The reinforcing cord for rubber reinforcement mentioned above can be manufactured by a manufacturing method of the present invention described below. In the manufacturing method described below, the materials mentioned in regards to the reinforcing cord for rubber reinforcement can be applied.
The manufacturing method of the present invention includes a step of applying an aqueous mixture (hereinafter also referred to as "Aqueous Mixture (C)") including, as its main components, a rubber latex having acrylonitrile as one of its raw materials (hereinafter also referred to as "Latex (A)") and a compound containing an oxazoline group ("Oxazoline Compound (B)" mentioned above) onto a reinforcing fiber (Step (i)). Here, an aqueous mixture means a mixture whose dispersion medium is aqueous; for example, it means a mixture in which 50 weight% or more of the dispersion medium is water. The Oxazoline Compound (B) is identical to that described above. The rubber of the Latex (A) is also identical to the Rubber (A) mentioned above.
The rubber of the Latex (A) and the Oxazoline Compound (B) occupies 50 weight% or more of the entire solid contents (the constituents other than the dispersion medium and the solvent) of the Aqueous Mixture (C) in total.
The manufacturing method of the present invention includes a next step of drying the applied Aqueous Mixture (C) to form a coating film on the surface of the reinforcing fiber (Step (ii)). The method of drying the Aqueous Mixture (C) is not limited, and it may be air drying, heat drying, vacuum drying or a combination of these.
The Oxazoline Compound (B) may be insoluble in water.
The oxazoline group of the Oxazoline Compound (B) may be a 2-oxazoline group.
The Latex (A) may include at least one selected from hydrogenated nitrile rubber latex or nitrile rubber latex.
The Aqueous Mixture (C) may include a resin dispersed therein. The resin, for example, is added to the mixture in a state of being dispersed in water. The resin may be at least one selected from the group consisting of polyurethane resin, epoxy resin, acrylic resin, phenol resin, melamine resin and low molecular weight polyolefin resin.
The Aqueous Mixture (C) may include at least one selected from the group consisting of a condensate of resorcinol and formaldehyde (hereinafter also referred to as "RF Condensate"), carbon black, a peroxide and isocyanate.
The Aqueous Mixture (C) may include at least one selected from the group consisting of vinylpyridine rubber latex, vinylpyridine-styrene-butadiene terpolymer rubber latex, butadiene rubber latex, butadiene-styrene copolymer rubber latex, dicarboxylated butadiene-styrene copolymer rubber latex, ethylene-propylene rubber latex, styrene terpolymer rubber latex, chlorosulfonated polyethylene rubber latex, fluorinated rubber latex and acrylic rubber latex.
A reinforcing cord for rubber reinforcement and a method of manufacturing the same according to the present invention are described in detail below.
The reinforcing fiber is not particularly limited in type or shape, as long as it enhances the shape stability and strength of a matrix rubber when it is buried in the matrix rubber. For example, these fibers may be employed: glass fibers; polyvinyl alcohol fibers, typically vinylon fibers; polyester fibers; polyamide fibers, such as nylon and aramid (aromatic polyamide) fibers; polyarylate fibers; polyketone fibers; carbon fibers; and polyparaphenylene benzobisoxazole fibers (hereinafter also referred to as "PBO fibers"). Among them, the glass fibers are preferred for their excellent heat resistance and tensile strength.
The glass types of the glass fibers are not particularly limited. However, a high strength glass, which is excellent in tensile strength, is preferred to a common no-alkali glass because the former meets the intended use as a reinforcing cord for rubber reinforcement.
The configuration of the fiber is not particularly limited. A filament, which is the basic element of glass fiber, is preferred to be chosen among common filaments with their mean diameters of 5 μm to 13 μm. A commonly employed glass fiber is formed by adding primary twists to each or bundles of a plurality of 50 to 2000 filaments in a same direction to make primarily twisted cords and then adding final twists, where the twisting direction is opposite from that of the primary twists, to a plurality of the primarily twisted cords in bundle. Other variously configured cords may be employed

as well, such as cords without adding final twists, cords having primary and final twists in the same direction, cords employing a fiber made of different materials for the core and the outer layer of the reinforcing cord for rubber reinforcement, and cords having directions of the primary and/or final twists. The cords twisted in such manners are suitable for use as toothed belts and the like.

The shape of the reinforcing fiber is not particularly limited as long as it can be buried in a matrix rubber, and specific examples may be a staple, a filament, a cord, a rope or a canvas.

The coating film of the reinforcing cord for rubber reinforcement of the present invention may be formed by applying an aqueous adhesive on the surface of the reinforcing fibers and then drying and curing them.

The main components of the Aqueous Mixture (C) are the rubber (Rubber (A)) of the Latex (A) and the Oxazoline Compound (B).

The Oxazoline Compound (B) functions as a cross-linking agent. In the reinforcing cord for rubber reinforcement of the present invention, the oxazoline group specifically enhances the adhesion of reinforcing fibers to a matrix rubber. The oxazoline group is represented as $-C_3H_4NO$ and it may be in three configurations. Among them, the 2-oxazoline group represented by the formula below is preferred as it can be obtained generally. The Oxazoline Compound (B) may use materials in various states, such as in a state of water dispersed or emulsified.

Formula 1

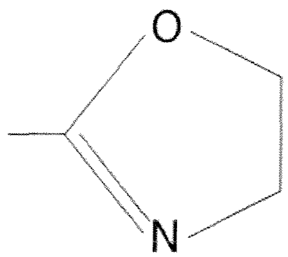

The Oxazoline Compound (B) may be a polymer containing an oxazoline group. Specific examples of the Oxazoline Compound (B) may include EPOCROS K-1010E, K-1020E, K-1030E, K-2010E, K-2020E and K-2030E manufactured by Nippon Shokubai Co., Ltd.

A rubber having acrylonitrile as one of its raw materials enables effective enhancement of the adhesion of the reinforcing fibers to the matrix rubber, as it fits in matrix rubber relatively well. A rubber having acrylonitrile as one of its raw materials also enables fabrication of a reinforcing cord for rubber reinforcement with high durability, as it is excellent in heat resistance and oil resistance. Examples of the Latex (A) may include a hydrogenated nitrile rubber latex and a nitrile rubber latex. The hydrogenated nitrile rubber may include zinc dimethacrylate dispersed therein. The Latex (A) includes one or more types of rubber having acrylonitrile as one of its raw materials.

The Aqueous Mixture (C) further may include latex other than the Latex (A). Examples of such rubber latex having no acrylonitrile in its raw materials may include vinylpyridine rubber latex, vinylpyridine-styrene-butadiene terpolymer rubber latex, butadiene rubber latex, butadiene-styrene copolymer rubber latex, dicarboxylated butadiene-styrene copolymer rubber latex, ethylene-propylene rubber latex, styrene terpolymer rubber latex, chlorosulfonated polyethylene rubber latex, fluorinated rubber latex and acrylic rubber latex. The Aqueous Mixture (C) may include one or a plurality of these latexes.

The Aqueous Mixture (C) may include a resin emulsion or a water dispersed resin other than the latex. Examples of the resin may include polyurethane resin, epoxy resin, acrylic resin, phenol resin, melamine resin and low molecular weight polyolefin resin. The Aqueous Mixture (C) is preferred to include one or a plurality of these resins in the state of either emulsion or water dispersed resin.

The Aqueous Mixture (C) may include a condensate (a condensation resin) of resorcinol and formaldehyde to improve the adhesion further.

The Aqueous Mixture (C) may include carbon black. A cost reduction for manufacturing a reinforcing cord for rubber reinforcement is enabled by adding carbon black, which is an inexpensive inorganic filler. Furthermore, it enables effective enhancement of the adhesion of the reinforcing cord for rubber reinforcement to the matrix rubber.

The Aqueous Mixture (C) may include even further constituents, such as an inorganic filler other than carbon black, a plasticizer, an antioxidant, a metal oxide, and a crosslinking auxiliary. An example of an inorganic filler may include silica particles.

The Aqueous Mixture (C) may include a peroxide. Crosslinking between the coating film and the matrix rubber

is promoted by adding the peroxide, and the adhesion of them is enhanced further. The type of peroxide is not limited. For example, an organic peroxide, such as hydroperoxide and dialkyl peroxide may be employed. However, a peroxide having a reaction rate comparable with that of the cross-linking agent blended into the matrix rubber has to be selected. Among various peroxides, cumene hydroperoxide is preferable since it is excellent in adhesion and handling property.

For further improvement in adhesion, the Aqueous Mixture (C) may include isocyanate. Isocyanate has a function of enhancing the crosslinkage.

The Aqueous Mixture (C) may include a plurality of the components selected from the condensation resin of resorcinol and formaldehyde, carbon black, a peroxide and isocyanate mentioned above.

The Rubber (A) and the Oxazoline Compound (B) are main components of the coating film of the reinforcing cord for rubber reinforcement of the present invention, and they occupy 50 weight% or more of the coating film in total. The Latex (A) and the Oxazoline Compound (B) are main components of the Aqueous Mixture (C). The weight of the solid contents of the Latex (A) and the Oxazoline Compound (B) in total occupies 50 weight% or more of that of the constituent other than the dispersion medium of the Aqueous Mixture (C).

In some cases, the Aqueous Mixture (C) may include many constituents in the dispersion medium (an aqueous solvent). However, the constituents that do not remain after forming the coating film are not considered as components of the coating film in the present invention. For example, in a case of an Aqueous Mixture (C) containing a lot of lower alcohol in an aqueous solvent, the lower alcohol is not considered as its component and is excluded from the judgment whether a substance is a main component of the Aqueous Mixture (C), since the lower alcohol is completely removed by heating when forming the coating layer.

The Aqueous Mixture (C) preferably is in a state in which components of the coating film is dispersed in an aqueous solvent. An aqueous solvent has an excellent handling property and the concentrations of its components are controlled easily. In addition, it remarkably reduces a burden on the environment compared to an organic solvent. An example of such an aqueous solvent may be a liquid medium in which water occupies 50 weight% or more, and more specifically water.

In the Aqueous Mixture (C), a weight ratio of solid contents of the Latex (A) and the Oxazoline Compound (B) is Latex (A) / Oxazoline Compound (B) = 100 /(2 to 70), and is preferably Latex (A) / Oxazoline Compound (B) = 100 / (10 to 50). An example of a weight ratio of solid contents of the components included in the Aqueous Mixture (C) may be Latex (A) / Oxazoline Compound (B) / Carbon Black / Peroxide = 100 / (2 to 70) / (0 to 50) / (0 to 20), and is preferably in the range of Latex (A) / Oxazoline Compound (B) / Carbon Black / Peroxide = 100 /(10 to 50) / (10 to 20) / (5 to 15). A weight ratio of the components in the coating film is the same weight ratio of solid contents mentioned above, as well.

Among these, the ratio between the Latex (A) and the Oxazoline Compound (B) is particularly important. In a case that the Oxazoline Compound (B) too little is contained, crosslinkage between the coating films and between the coating film and the matrix rubber becomes insufficient, which results in a tendency towards peeling at their interfaces.

On the other hand, the latex becomes relatively insufficient in a case that the Oxazoline Compound (B) is contained too much. That means hardness of the coating film itself gets too high, which results in deteriorating the bending fatigue resistance.

The methods of applying the Aqueous Mixture (C) onto a reinforcing fiber and of drying the applied Aqueous Mixture (C) are not particularly limited. In general, a reinforcing fiber may be immersed in a container with the Aqueous Mixture (C) and the dispersion medium may be removed by a drying furnace after drawing up the reinforcing fiber. The drying condition to remove the dispersion medium is not limited, and an example of such condition may include exposing under an atmosphere at a temperature of 80°C to 160°C for 0.1 to 2 minutes.

A cross-sectional view of an example of the reinforcing cord for rubber reinforcement formed in such manners is schematically shown in FIG. 1. A reinforcing cord for rubber reinforcement 10 includes reinforcing fibers 11 and a coating film 12 covering the periphery of the reinforcing fibers 11. There is a preferred range for an attachment ratio of the coating film 12. The attachment ratio R of the coating film is percentage by weight showing how much weight of the coating film is attached in comparison with the weight of the glass fibers in the dried cord, and is represented by the following formula.

$$R\ (\%) = ((C1 - C0) / C0) \times 100$$

C0: dry weight of glass fibers before covering, C1: dry weight of reinforcing cord after covering

The attachment ratio R is preferably 10% to 30%, and is more preferably 12% to 25%. When the attachment ratio R is lower than 10%, it becomes difficult to cover all the surface of the reinforcing fibers with the coating film.

On the other hand, when the attachment ratio R exceeds 30%, such a problem is prone to arise that the Aqueous Mixture (C) drops down while forming the coating film. In addition, because the coating film became too thick, problems,

such as having different characteristics between the core and the periphery of the reinforcing cord for rubber reinforcement, are prone to arise.

The means of burying the reinforcing cord for rubber reinforcement in the matrix rubber is not particularly limited, and well known means may be applied as they are. The rubber product thus obtained is provided with high heat resistance derived from the characteristics of the matrix rubber and high endurance achieved by burying the reinforcing cord for rubber reinforcement inside. Accordingly, such a rubber product is particularly suitable for uses of toothed belts for engines and the like.

For the matrix rubber, a rubber containing a hydrogenated nitrile rubber as its main component; a rubber containing a hydrogenated nitrile rubber, as its main component, including zinc dimethacrylate dispersed therein; or a rubber containing an ethylene-propylene rubber as its main component preferably may be applied.

EXAMPLES

Hereinafter, the present invention is described further in detail using examples.

[Example 1-1]

Three glass fibers (each having an E-glass composition and being bundles of 200 glass filaments whose mean diameter was 9 μm) were bundled together, and they were dried in a drying furnace at 150°C for one minute after the Aqueous Mixture (C) indicated in Table 1 was applied. Thus, a coating film was formed.

Table 1

| Components | Content (Parts by Weight) |
|---|---|
| H-NBR Latex (Solid Content: 40 weight%) (*1-1) | 100 |
| Phenol resin Emulsion (Solid Content: 48 weight%) (*1-2) | 20 |
| Water Dispersion of Oxazoline Compound (Solid Content: 40 weight%) (*1-3) | 60 |
| (*1-1) ZETPOL LATEX, manufactured by ZEON Corporation<br>(*1-2)YUKA Resin KE 912-1, manufactured by Yoshimura Oil Chemical Co., Ltd.<br>(*1-3) EPOCROS K-2030E, manufactured by Nippon Shokubai Co., Ltd. | |

Primary twists were added to the glass fibers with the coating film formed thereon at a rate of 8 times/10 cm. Eleven of the primarily twisted glass fibers were prepared, and final twists further were added to them and they were bundled together, at a rate of 8 times/10 cm to obtain a reinforcing cord for rubber reinforcement. The attachment ratio of the coating film to the weight of the reinforcing cord for rubber reinforcement was 20 weight%.

Subsequently, evaluations were made with respect to adhesion between this reinforcing cord for rubber reinforcement and the matrix rubber indicated in Table 2. The adhesion was evaluated by measuring the peel strength between the matrix rubber and the reinforcing fibers.

The means for measuring the peel strength is described in the following. First, a specimen (25 mm (width) x 50 mm (length) x 5 mm (thickness)) having the composition indicated in Table 2 was fabricated. Twenty-five of the reinforcing cords for rubber reinforcement were placed on the specimen along with the long sides of the specimen to be heated at 170°C for 30 minutes and thereby both of them were adhered to each other. The sample thus obtained was stretched with a tensile tester in the direction in which the fibers had been arranged, and the peel strength was measured when the matrix rubber and the reinforcing fibers peel away from each other. The adhesion between the matrix rubber and the reinforcing fibers was evaluated by the peel strength. Furthermore, the fracture surfaces of the specimen were observed visually to observe the rupture mode, i.e. it was judged whether the fracture was "rubber fracture" in which the whole matrix rubber remained on the reinforcing cord side or "interfacial peeling" in which the matrix rubber did not remain on the reinforcing cord side at all.

Table 2

| Components | Content (Parts by Weight) |
|---|---|
| H-NBR (*2-1) | 70 |
| H-NBR / ZDMA (*2-2) | 30 |
| ZnO | 10 |

(continued)

| Components | Content (Parts by Weight) |
|---|---|
| Stearic Acid | 1 |
| Carbon Black | 30 |
| Trioctyl Trimellitate | 5 |
| Sulfur | 0.1 |
| 1,3-Bis-(t-butylperoxy-isopropyl)-benzene) | 6 |
| (*2-1) ZETPOL 2020, manufactured by ZEON Corporation<br>(*2-2) ZSC 2000L, manufactured by ZEON Corporation | |

Durability of a rubber product was evaluated in the following manner. First, 1 m of the reinforcing cord for rubber reinforcement fabricated in Example was taken as a core, and the center of the reinforcing cord for rubber reinforcement was buried in the matrix rubber having a composition indicated in Table 2. A flat belt of 19 mm in width and 300 mm in the belt length was formed at the middle of the reinforcing cord for rubber reinforcement in such a manner. A cross-sectional view of the flat belt part is shown schematically in FIG. 2. The flat belt 20 includes a matrix rubber 21 and a reinforcing cord 22 for rubber reinforcement buried in the matrix rubber. The flat belt 20 was evaluated by employing an apparatus for bending test shown in FIG. 3.

The apparatus 30 for bending test was provided with a heating bath 31 to alter testing conditions. The flat belt 20 with a length of 300 mm was formed at the middle of 1 m of the reinforcing cord 22 for rubber reinforcement. The both ends of the reinforcing cord 22 for rubber reinforcement was connected to a linear motor 32 and a weight 33. The reinforcing cord 22 for rubber reinforcement also was hung on a pulley 34. The flat belt 20 formed at the middle of the reinforcing cord 22 for rubber reinforcement was hung on a roller 35, and is bent in the part of the roller 35. The vicinity of the roller 35 is arranged within the heating bath 31. The flat belt 20 was reciprocated by the linear motor 32 to repeatedly perform bending tests. The heating bath 31 had a structure in which a liquid 36, such as water and oil, may be stored.

Three kinds of bending tests, which are heat resistance testing, under-water testing and under-oil testing, were operated and the bending number of each test was 20000 times. The heat resistance testing was operated with the heating bath 31 filled with only air and the temperature inside the heating bath 31 was set at 80°C. The under-water testing was operated with the heating bath 31 filled with water at room temperature. The under-oil testing was operated with the heating bath 31 filled with oil at a temperature of 120°C.

The tensile strengths before and after the bending tests were measured and the strength retention was calculated by the formula below. Durability of the rubber products was evaluated based on the strength retention. "Tensile strengths" in the present specification is defined as the maximum strength when both ends of the flat belt was fastened and stretched until the flat belt was ruptured.

$$\text{Strength Retention (\%)} = (\text{Tensile Strength After Testing} / \text{Tensile Strength Before Testing}) \times 100$$

Results of the testing are shown in Table 3.

Table 3

| | Example 1-1 | Example 1-2 | Example 1-3 | Comparative Example 1-1 | Comparative Example 1-2 |
|---|---|---|---|---|---|
| Components of the Aqueous Mixture | H-NBR OXZ Phenol Resin | H-NBR OXZ Carbon Black | NBR OXZ RF | H-NBR RF | NBR RF |
| Adhesion Strength (N/cm) | 80 | 110 | 90 | 40 | 35 |
| Rupture Mode | Rubber Fracture | Rubber Fracture | Rubber Fracture | Interfacial Peeling | Interfacial Peeling |

(continued)

| | | Example 1-1 | Example 1-2 | Example 1-3 | Comparative Example 1-1 | Comparative Example 1-2 |
|---|---|---|---|---|---|---|
| Strength Retention (%) | Heat Resistance Testing | 85 | 91 | 84 | 83 | 78 |
| | Under-Water Testing | 69 | 82 | 83 | 60 | 73 |
| | Under-Oil Testing | 61 | 64 | 58 | 46 | 40 |
| H-NBR: hydrogenated nitrile rubber, NBR: nitrile rubber, OXZ: oxazoline compound, RF: resorcinol- formaldehyde condensate | | | | | | |

[Example 1-2, Example 1-3]

In Example 1-2 and Example 1-3, an Aqueous Mixture (C) indicated in Table 4 was employed instead of the Aqueous Mixture (C) used in Example 1-1. Other than that, a reinforcing cord for rubber reinforcement and a flat belt were fabricated in the same manner as Example 1-1, and they were evaluated in the same manner as Example 1-1. Results of the evaluation are shown in Table 3.

Table 4

| Components | Content (Parts by Weight) | |
|---|---|---|
| | Example 1-2 | Example 1-3 |
| H-NBR Latex (Solid Content: 40 weight%) (*4-1) | 100 | 0 |
| Nitrile Rubber Latex (Solid Content: 41 weight%) (*4-2) | 0 | 100 |
| Water Dispersion of Oxazoline Compound (Solid Content: 40 weight%) (*4-3) | 60 | 60 |
| Water Dispersion of Carbon Black (Solid Content: 30 weight%) | 20 | 0 |
| RF Condensate (Solid Content: 8 weight%, Molar Ratio of R/F = 1 /1.3) | 0 | 20 |
| (*4-1) ZETPOL LATEX, manufactured by ZEON Corporation<br>(*4-2) NIPOL 1561, manufactured by ZEON Corporation<br>(*4-3) EPOCROS K-2030E, manufactured by Nippon Shokubai Co., Ltd. | | |

[Comparative Example 1-1, Comparative Example 1-2]

In Comparative Example 1-1 and Comparative Example 1-2, an Aqueous Mixture (C) indicated in Table 5 was employed instead of the Aqueous Mixture (C) used in Example 1-1. The temperature in the drying furnace was set at 230°C on drying the aqueous mixture applied on the glass fiber. Other than those, a reinforcing cord for rubber reinforcement and a flat belt were fabricated in the same manner as Example 1-1, and they were evaluated in the same manner as Example 1-1. Results of the evaluation are shown in Table 3.

Table 5

| Components | Content (Parts by Weight) | |
|---|---|---|
| | Comparative Example 1-1 | Comparative Example 1-2 |
| H-NBR Latex H-NBR Latex (Solid Content: 40 weight%) (*5-1) | 65 | 0 |
| Nitrile Rubber Latex (Solid Content: 41 weight%) (*5-2) | 0 | 65 |
| RF Condensate (Solid Content: 8 weight%, Molar Ratio of R/F = 1 /1.3) | 30 | 30 |

(continued)

| Components | Content (Parts by Weight) | |
|---|---|---|
| | Comparative Example 1-1 | Comparative Example 1-2 |
| 25 weight% of Aqueous Ammonia | 1 | 1 |
| Water | 4 | 4 |
| (*5-1) ZETPOL LATEX, manufactured by ZEON Corporation<br>(*5-2) NIPOL 1561, manufactured by ZEON Corporation | | |

As shown in Table 3, the adhesion strength was increased considerably by adding the oxazoline compound. Such tendency was outstandingly found in the Aqueous Mixture (C) including H-NBR and carbon black. Moreover, the effect for adding the oxazoline compound was recognized in the strength retention in the bending tests as well.

[Example 2-1, Example 2-2, Comparative Example 2-1]

The reinforcing cords for rubber reinforcement fabricated in Example 1-1, Example 1-2 and Comparative Example 1-1 are adhered with or buried in the matrix rubber having a composition indicated in Table 6 to fabricate each sample of Example 2-1, Example 2-2 and Comparative Example 2-1, respectively. Each sample was evaluated as mentioned above.

Table 6

| Components | Content (Parts by Weight) |
|---|---|
| EPDM Rubber | 70 |
| Nitrile Rubber | 30 |
| Carbon Black | 20 |
| Trioctyl Trimellitate | 5 |
| Sulfur | 0.1 |
| 1,3-Bis-(t-butylperoxy-isopropyl)-benzene | 6 |
| EPDM: Ethylene-Propylene-Diene Terpolymer | |

EPDM is a rubber obtained by polymerizing ethylene and propylene with another third component, and is a type of ethylene-propylene rubber. EPDM is excellent in its weather resistance, heat aging resistance and ozone resistance. EPDM is used in a wide range of fields, such as various vehicle parts, typically of automobiles; belts; gaskets; electric wires; waterproofing agents and improved high-impact materials of polyolefin (fenders).

Results of the evaluation are shown in Table 7.

Table 7

| | Example 2-1 | Example 2-2 | Comparative Example 2-1 |
|---|---|---|---|
| Components of the Aqueous Adhesive | H-NBR OXZ Phenol Resin | H-NBR OXZ Carbon Black | H-NBR RF |
| Adhesion Strength (N/cm) | 95 | 140 | 60 |
| Rupture Mode | Rubber Fracture | Rubber Fracture | Interfacial Peeling |

(continued)

| | | Example 2-1 | Example 2-2 | Comparative Example 2-1 |
|---|---|---|---|---|
| Strength Retention (%) | Heat Resistance Testing | 75 | 88 | 80 |
| | Under-Water Testing | 79 | 87 | 72 |
| | Under-Oil Testing | 40 | 43 | 33 |
| H-NBR: hydrogenated nitrile rubber, OXZ: oxazoline compound, RF: resorcinol- formaldehyde condensate | | | | |

As shown in Table 7, the adhesion strength was increased considerably by adding oxazoline. Such tendency was outstandingly found in the Aqueous Mixture (C) including carbon black. Moreover, the effect for adding the oxazoline compound was recognized in the strength retention in the bending tests as well.

Industrial Applicability

The present invention is applicable to a reinforcing cord for rubber reinforcement. Furthermore, the present invention is applicable to various rubber products that use a reinforcing cord for rubber reinforcement of the present invention.

## Claims

**1.** A reinforcing cord for rubber reinforcement comprising a reinforcing fiber,
wherein a coating film is formed on a surface of the reinforcing fiber, and
the coating film includes, as its main components, a rubber having acrylonitrile as one of its raw materials and a compound containing an oxazoline group.

**2.** The reinforcing cord for rubber reinforcement according to claim 1, wherein the compound is insoluble in water.

**3.** The reinforcing cord for rubber reinforcement according to claim 2, wherein the oxazoline group is a 2-oxazoline group.

**4.** The reinforcing cord for rubber reinforcement according to claim 2, wherein the rubber includes at least one rubber selected from a group consisting of a hydrogenated nitrile rubber and a nitrile rubber.

**5.** The reinforcing cord for rubber reinforcement according to claim 2, wherein the coating film includes a resin.

**6.** The reinforcing cord for rubber reinforcement according to claim 5, wherein the resin is at least one selected from the group consisting of polyurethane resin, epoxy resin, acrylic resin, phenol resin, melamine resin and low molecular weight polyolefin resin.

**7.** The reinforcing cord for rubber reinforcement according to claim 2, wherein the coating film includes at least one selected from the group consisting of a condensate of resorcinol and formaldehyde, carbon black, a peroxide and isocyanate.

**8.** The reinforcing cord for rubber reinforcement according to claim 2, wherein the coating film includes at least one selected from the group consisting of vinylpyridine rubber, vinylpyridine-styrene-butadiene terpolymer rubber, butadiene rubber, butadiene-styrene copolymer rubber, dicarboxylated butadiene-styrene copolymer rubber, ethylene-propylene rubber, styrene terpolymer rubber, chlorosulfonated polyethylene rubber, fluorinated rubber and acrylic rubber.

**9.** A rubber product in which the reinforcing cord for rubber reinforcement according to claim 2 is buried in a matrix rubber.

**10.** The rubber product according to claim 9, wherein the matrix rubber includes a hydrogenated nitrile rubber as its main component.

**11.** The rubber product according to claim 9, wherein the hydrogenated nitrile rubber includes zinc dimethacrylate dispersed therein.

**12.** The rubber product according to claim 9, wherein the matrix rubber includes an ethylene-propylene rubber as its main component.

**13.** The rubber product according to claim 9, which is a toothed belt.

**14.** A method of manufacturing a reinforcing cord for rubber reinforcement, comprising:

(i) applying an aqueous mixture including, as its main components, a rubber latex having acrylonitrile as one of its raw materials and a compound containing an oxazoline group onto a reinforcing fiber; and
(ii) drying the applied aqueous mixture to form a coating film on a surface of the reinforcing fiber.

**15.** The method of manufacturing according to claim 14, wherein the compound is insoluble in water.

**16.** The method of manufacturing according to claim 15, wherein the oxazoline group is a 2-oxazoline group.

**17.** The method of manufacturing according to claim 15, wherein the latex includes at least one selected from hydrogenated nitrile rubber latex or nitrile rubber latex.

**18.** The method of manufacturing according to claim 15, wherein the aqueous mixture includes a resin dispersed therein.

**19.** The method of manufacturing according to claim 18, wherein the resin is at least one selected from the group consisting of polyurethane resin, epoxy resin, acrylic resin, phenol resin, melamine resin and low molecular weight polyolefin resin.

**20.** The method of manufacturing according to claim 15, wherein the aqueous mixture includes at least one selected from the group consisting of a condensate of resorcinol and formaldehyde, carbon black, a peroxide and isocyanate.

**21.** The method of manufacturing according to claim 15, wherein the aqueous mixture includes at least one selected from the group consisting of vinylpyridine rubber latex, vinylpyridine-styrene-butadiene terpolymer rubber latex, butadiene rubber latex, butadiene-styrene copolymer rubber latex, dicarboxylated butadiene-styrene copolymer rubber latex, ethylene-propylene rubber latex, styrene terpolymer rubber latex, chlorosulfonated polyethylene rubber latex, fluorinated rubber latex and acrylic rubber latex.

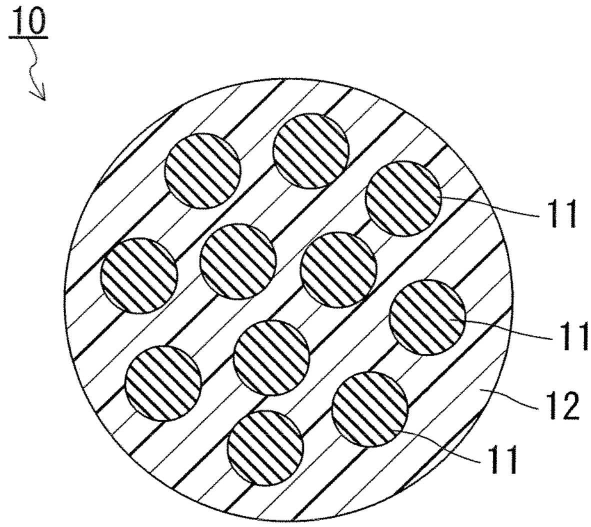


Fig.1

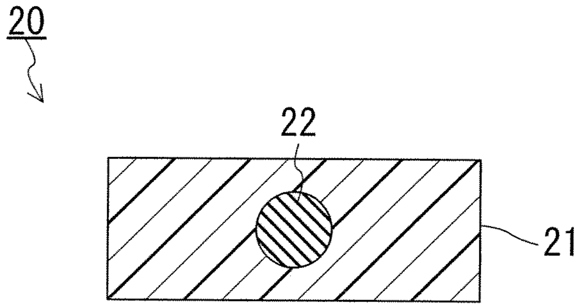


Fig.2

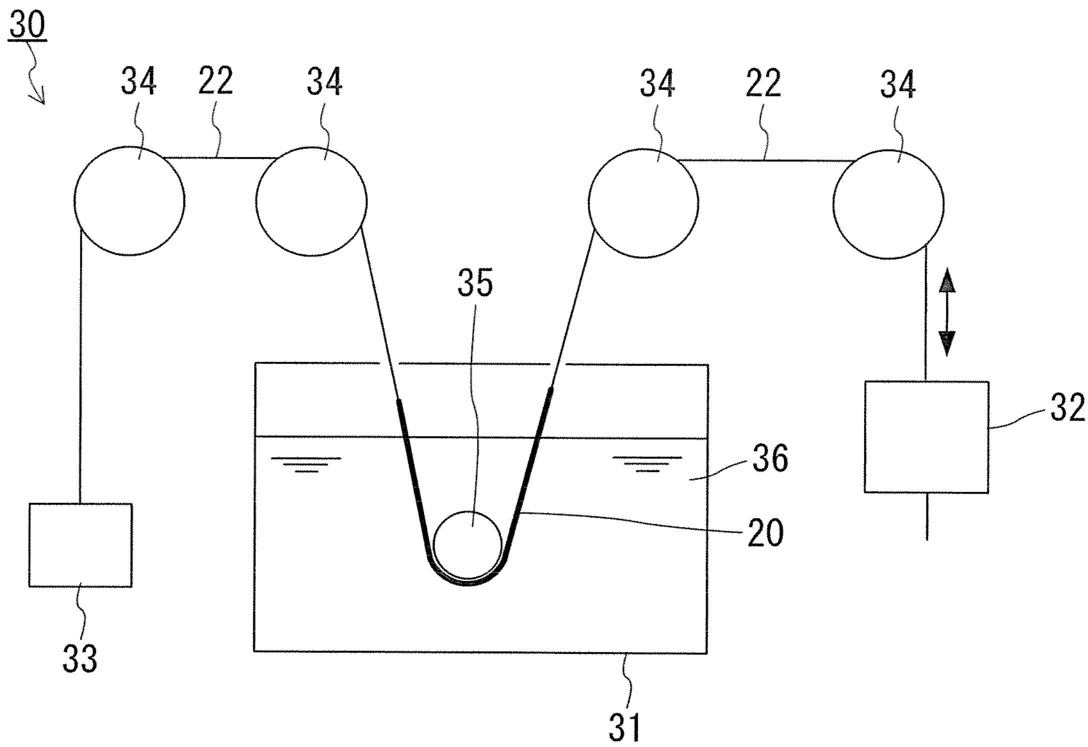


Fig.3

**INTERNATIONAL SEARCH REPORT**

International application No.
PCT/JP2005/020638

A. CLASSIFICATION OF SUBJECT MATTER
*D06M15/693*(2006.01)

According to International Patent Classification (IPC) or to both national classification and IPC

B. FIELDS SEARCHED

Minimum documentation searched (classification system followed by classification symbols)
D06M15/00-15/715, D02G1/00-3/48, D02J1/00-13/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPIL

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 11-335973 A (Unitika Ltd.),<br>07 December, 1999 (07.12.99),<br>Claims; Par. Nos. [0019], [0021]<br>(Family: none) | 1-5,7-9,<br>13-18,20,21<br>10-12<br>6,19 |
| X<br>Y | JP 10-46475 A (Teijin Ltd.),<br>17 February, 1998 (17.02.98),<br>Claims; Par. Nos. [0009], [0016], [0019] to [0020]<br>(Family: none) | 1-9,13-21<br>10-12 |
| X<br><br>Y<br>A | JP 5-339552 A (Nippon Shokubai Co., Ltd.),<br>21 December, 1993 (21.12.93),<br>Claims; Par. Nos. [0009], [0019]<br>(Family: none) | 1-5,7-9,<br>13-18,20,21<br>10-12<br>6,19 |

☒ Further documents are listed in the continuation of Box C.  ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 01 February, 2006 (01.02.06) | 14 February, 2006 (14.02.06) |
| Name and mailing address of the ISA/<br>Japanese Patent Office<br><br>Facsimile No. | Authorized officer<br><br><br>Telephone No. |

Form PCT/ISA/210 (second sheet) (April 2005)

**INTERNATIONAL SEARCH REPORT**

International application No.
PCT/JP2005/020638

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-280424 A (Unitta Co., Ltd.), 10 October, 2001 (10.10.01), Claims; Effect of the invention (Family: none) | 10,11 |
| Y | JP 2003-343658 A (Bando Chemical Industries, Ltd.), 03 December, 2003 (03.12.03), Claims (Family: none) | 12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63270877 A
- JP 11241275 A
- JP 5339552 A
- JP 3379069 B
- JP 2004183121 A